# EUROPEAN PATENT APPLICATION

(11) **EP 1 407 847 A2**
(43) Date of publication of application: **14.04.2004**
(21) Application number: 03020157.8
(22) Date of filing: 05.09.2003
(51) Int. Cl.: B23D 49/16, B23D 51/16

(54) **A reciprocating saw**

(30) Priority: 07.10.2002 GB 0223194
(71) Applicant: Black & Decker Inc., Newark Delaware 19711 (US)
(72) Inventor: Armstrong, Jonathan, Crook County Durham DL 15 OSX (GB)
(74) Representative: Bell, Ian Stephen

(57) **Abstract**

A reciprocating saw (2) comprising a cutting arrangement (22) capable of performing reciprocating motion; a rotatable drive shaft (14) with a drive shaft axis (16), wherein the drive shaft (14) comprises a first eccentric (52); a timing actuator (18) capable of performing reciprocating motion, wherein the timing actuator (18) is associated with the cutting arrangement (22) so that, in use, the reciprocating motion of the timing actuator (18) is transmitted to the cutting arrangement (22); and a counterweight (20) capable of performing reciprocating motion, wherein the counterweight (20) is coupled to the first eccentric (52) so that, in use, rotation of the first eccentric drives the reciprocating motion of the counterweight (20), wherein the reciprocating motion of the counterweight (20) is out of phase with the reciprocating motion of the cutting arrangement (22), characterised in that the drive shaft (14) comprises a second eccentric (58), wherein the second eccentric (58) is associated with the timing actuator (18) so that, in use, the rotation of the second eccentric (58) controls the reciprocating motion of the timing actuator (18).

## Description

The present invention relates to a reciprocating saw and, in particular, to an improved drive mechanism for a reciprocating saw.

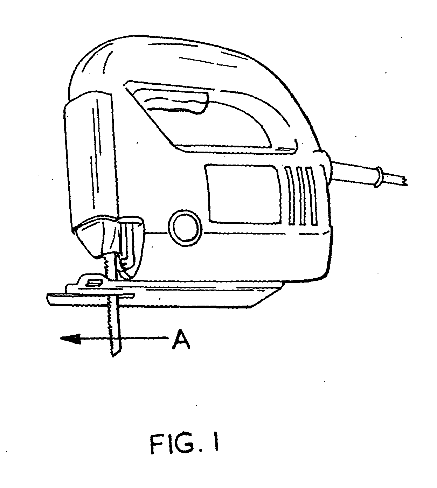

Reciprocating saws are well known in the art. Some reciprocating saws are stationary power tools, whereas other reciprocating saws are portable power tools. Certain reciprocating saws are robustly designed to cut through large pieces of wood or steel bars. Certain other reciprocating saws, such as a jigsaw, are designed for cutting through a smaller workpiece in fine detail. A reciprocating saw in the form of a conventional jigsaw is shown in figure 1. A jigsaw of this type is used for cutting a workpiece in a cutting direction shown by arrow A. All reciprocating saws have the common feature of a saw blade performing reciprocating motion in order to cut a workpiece.

German utility model publication no. DE29912907U1 discloses one such reciprocating saw comprising a cutting arrangement capable of performing reciprocating motion, a rotatable drive shaft with a drive shaft axis, wherein the drive shaft comprises a first eccentric, a timing actuator capable of performing reciprocating motion, wherein the timing actuator is associated with the cutting arrangement so that, in use, the reciprocating motion of the timing actuator is transmitted to the cutting arrangement, and a counterweight capable of performing reciprocating motion, wherein the counterweight is coupled to the first eccentric so that, in use, rotation of the first eccentric drives the reciprocating motion of the counterweight, wherein the reciprocating motion of the counterweight is out of phase with the reciprocating motion of the cutting arrangement.

The reciprocating saw disclosed by document DE29912907U1 has only one single eccentric to drive the counterweight and control the timing actuator. While the aim of having one single eccentric is to make the reciprocating saw more compact, the single eccentric nonetheless gives rise to certain disadvantages. In particular, the freedom to design the single eccentric in accordance with the timing actuator is comprised by the need to make the single eccentric also compatible with the requirements of the counterweight, and vice versa. Such compromises may require expensive component materials, complex component arrangement, additional components, or other compromise solutions.

The present invention provides a reciprocating saw as described at the outset, characterised in that the drive shaft comprises a second eccentric, wherein the second eccentric is associated with the timing actuator so that, in use, the rotation of the second eccentric controls the reciprocating motion of the timing actuator. This has the advantage that the first eccentric can be designed solely for the purpose of operating the reciprocating motion of the counterweight without considering the timing actuator, and the second eccentric can be designed solely for the purpose of controlling the timing actuator without considering the counterweight. This freedom promotes efficiency in the design of the first eccentric, second eccentric, the timing actuator, or cutting arrangement, each of which can therefore be made smaller, lighter or less complex. Also, the most suited materials can be chosen for these components to prove their efficiency.

Preferably, the reciprocating motion of the timing actuator is superimposed upon the reciprocating motion of the cutting arrangement. This creates two components to the reciprocating motion of the cutting arrangement which can improve the cutting action of the reciprocating saw, provided that these two components of the reciprocating motion of the cutting arrangement are in a plane parallel to the cutting direction. For example, the first component can be the up and down reciprocating motion of the cutting arrangement, and the second component can be the backward and forward reciprocating motion of the cutting arrangement. In this case, the cutting action may be performed during the upward motion of the cutting arrangement and the forward motion is time to coincide with the upper motion in order to counteract cutting frictional forces acting upon the or cutting arrangement in the opposite sense to the cutting direction. By doing this, the forward motion eliminates, or significantly reduces, deflection of the cutting arrangement in the opposite sense to the cutting direction thereby improving the cutting action of the reciprocating saw. The two components of the reciprocating motion of the cutting arrangement can be in phase, or out of phase, depending on the requirements of the reciprocating saw.

Preferably, the first eccentric is a first cam arranged eccentrically with respect to the drive shaft axis, wherein the first cam is yoked by an aperture in the counterweight. The transverse elongate counterweight aperture surrounds the substantially cylindrical first can in the manner of a yoke. In use, the first can rotates about the drive shaft axis. The horizontal component of this rotational motion is accommodated by the counterweight aperture which permits side to side motion of the first can within its confines without causing side to side motion of the counterweight. Whereas the vertical component of this rotational motion is not accommodated by the counterweight aperture and instead of the counterweight moves up and down in time with the up and down motion of the first cam. This is a simple means of translating the rotational movement of the drive shaft into the reciprocating rectilinear motion of the counterweight.

Preferably, the drive shaft comprises a driven gear and the second eccentric is located between the driven gear and the counterweight. The second eccentric can be integral with the driven gear, or the second eccentric can be a separate component fixed to the driven gear.

Preferably, the second eccentric is a second cam arranged eccentrically with respect to the drive shaft axis. Rotation of the second cam about the drive shaft axis can be used as a simple means of converting its rotational motion into reciprocating motion, as is described in more detail below.

Preferably, the timing actuator comprises a first part and a second part, wherein the first part engages the second cam so that, in use, the second cam drives the reciprocating motion of the timing actuator, and wherein the second part is associated with the cutting arrangement so that, in use, the reciprocating motion of the timing actuator is transmitted to the cutting arrangement. The first part and the second part can be integral components of the timing actuator.

Preferably, the first part is coupled to the second part. In this case, the first part and the second part may not necessarily be integral components of the timing actuator. Instead, the first part can be coupled to the second part by a mechanical, electrical, pneumatic, or hydraulic link, depending on the special requirements of the area of the jigsaw accommodating the timing actuator. Alternatively, the first part is coupled to the second part by at least one intermediate part. In this case, the at least one intermediate part may be a mechanical link comprising one component, again depending on the special requirements of the area of the jigsaw accommodating the timing actuator.

Preferably, the first part is a cam follower contacting the second cam. A cam follower is a simple component which abuts the eccentric peripheral face of the second cam to perform reciprocating rectilinear motion or oscillating motion when the second cam rotates. Preferably, the cam follower is pivotally mounted on a cam follower axis for oscillating motion.

Preferably, the second part is a bearing arranged to bear against the cutting arrangement. In this case, the reciprocating motion of the timing actuator is transmitted to the cutting arrangement through abutment between the bearing and the cutting arrangement. The bearing can abut any part of the cutting arrangement. The bearing may be a sliding plate or bracket. Preferably, the bearing is pivotally mounted on a bearing support axis for oscillating motion.

Preferably, the bearing comprises a wheel rotatably mounted on the bearing. In this case, it is the wheel that abuts the cutting arrangement because it can rotate to follow the reciprocating motion of the cutting arrangement, thereby reducing friction between the bearing and the cutting arrangement.

Preferably, the cutting arrangement comprises a shaft and a saw blade clamped to the shaft. In this case, a used saw blade can be replaced at the end of its lifespan.

Preferably, the reciprocating motion of the counterweight is 180° out of phase with the reciprocating motion of the cutting arrangement. This has the advantage that the inertial forces created by the reciprocating motion of the cutting arrangement can be substantially counteracted by the reciprocating motion of the counterweight.

Preferably, the reciprocating saw is a jigsaw supported by a shoe.

A preferred embodiment of the present invention will now be described by way of example only, with reference to the accompanying illustrative drawings in which:
Figure 2 shows a perspective view from one side of an electric motor and a drive mechanism of a reciprocating saw;
Figure 3 shows an exploded perspective view of the drive mechanism, from the opposite side as shown in Figure 2;
Figure 4 shows an exploded perspective view of the drive mechanism, from the same side as shown in Figure 2;
Figure 5 shows a side elevational view of the electric motor and the drive mechanism inside one half of a housing of the reciprocating saw, from the same side as shown in Figure 2; and
Figure 6 shows a cross-sectional view of the drive mechanism along the section X-X.

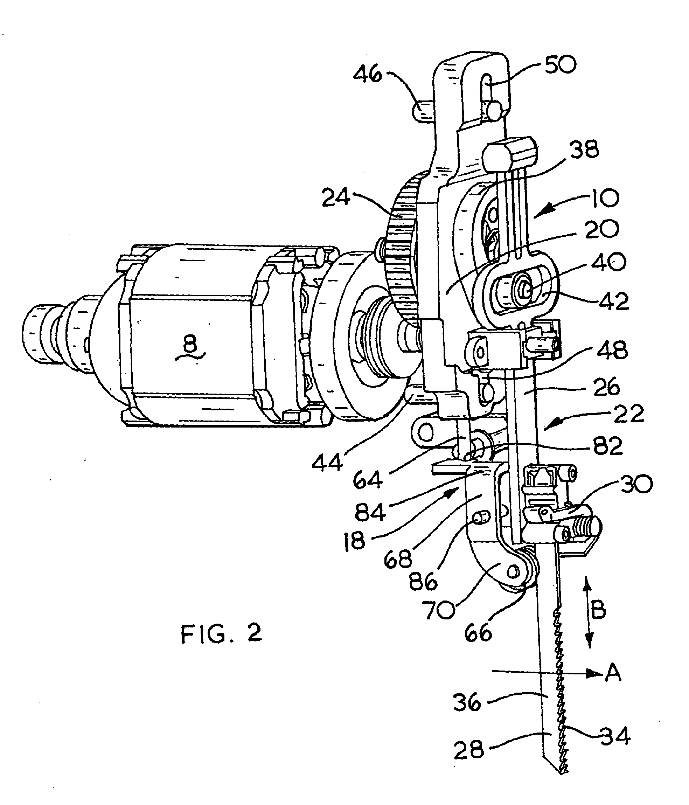

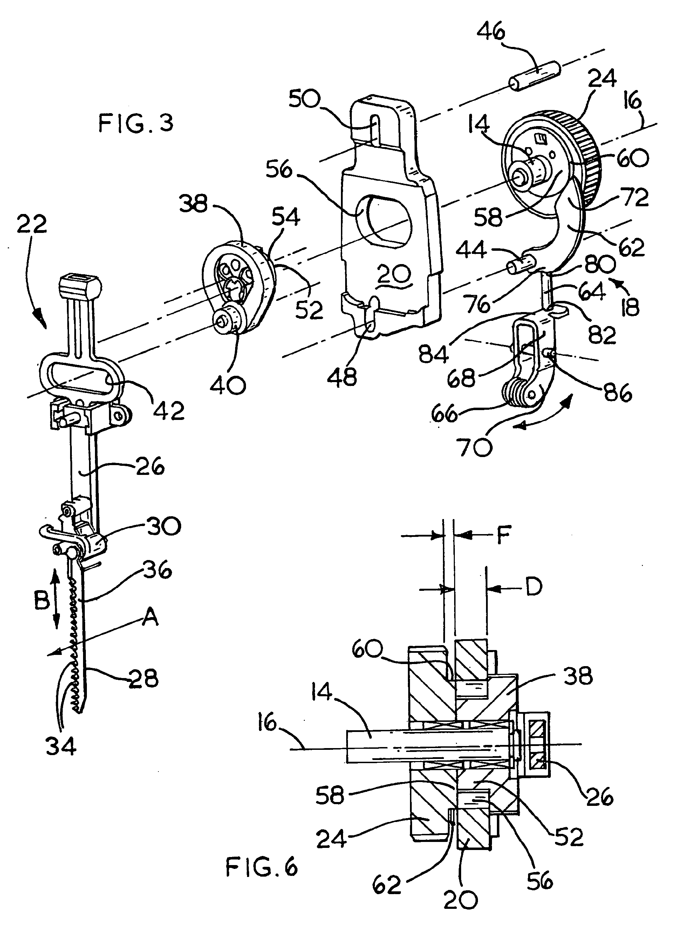

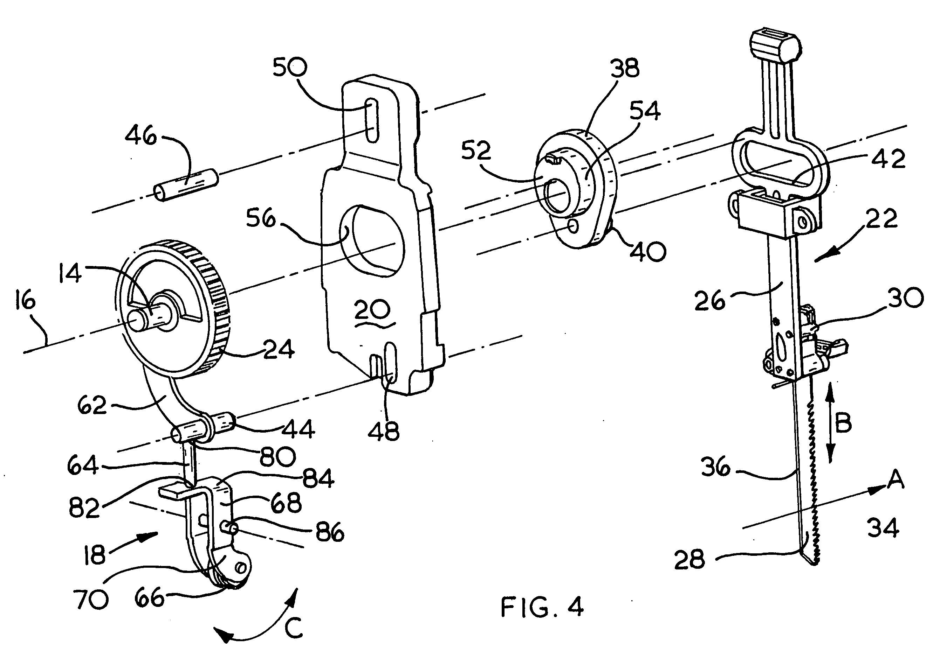

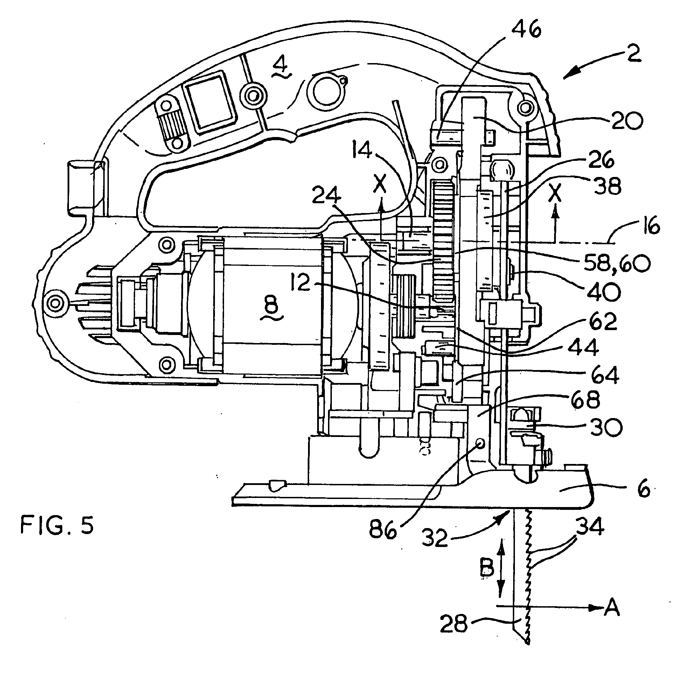

Referring to figures 2 to 6, the reciprocating saw 2 comprises a housing 4 and a shoe 6 which supports the housing 4 and, in use, rests upon a workpiece (not shown). The housing 4 encapsulates an electric motor 8 and a drive mechanism 10. The electric motor 8 is coupled to a drive gear 12. The drive mechanism 10 comprises a rotatable drive shaft 14 with a drive shaft axis 16, a timing actuator 18, a counterweight 20, a cutting arrangement 22, and a driven gear 24 mounted on the drive shaft 14. The drive gear 12 intermeshes with the driven gear 24 so that, in use, the electric motor 8 rotates the drive shaft 14 about the drive shaft axis 16.

The majority of the cutting arrangement 22 is mounted within the housing 4. In use, the cutting arrangement 22 performs vertical rectilinear reciprocating motion in the direction of the double arrow B. The cutting arrangement 22 comprises a shaft 26 and a saw blade 28 releaseably clamped to the shaft 26 by a clamp 30. The plane of the saw blade 28 is parallel to the cutting direction A and the saw blade 28 projects downward through a recess 32 in the shoe 6. The saw blade 28 has a row of saw teeth 34 on a leading side oriented in the cutting direction A. The saw blade 28 has a planar face 36 on a trailing side orientated counter to the cutting direction.

A crank plate 38 is mounted upon the drive shaft 14 and is adjacent the cutting arrangement 22. A pin 40 projects from a side of the crank plate 38 facing the cutting arrangement 22. The pin 40 is rotatable with respect to the crank plate 38. The pin 40 is eccentric with respect to the drive shaft axis 16. The shaft 26 of the cutting arrangement 22 has a transverse elongate shaft aperture 42 which surrounds the pin 40 in the manner of the yoke. In use, the pin 40 rotates about the drive shaft axis 16. The horizontal component of its rotational motion is accommodated by the shaft aperture 42 which permits side to side motion of the pin 40 within its confines without causing side to side motion of the cutting arrangement 22. Whereas the vertical component of this rotational movement is not accommodated by the shaft aperture 42 and instead the cutting arrangement 22 moves vertically up and down in time with the vertical up and down motion of the pin 40. This is a simple means of translating the rotational movement of the drive shaft 14 into reciprocating rectilinear motion of the cutting arrangement 22.

The counterweight 20 is arranged upon two guide pins 44, 46 each penetrating a respective guide slot 48, 50 in the counterweight 20. The guide pins 44, 46 are fixed in relation to the jigsaw housing 4. The guide slots 48, 50 are elongate and are orientated to permit the counterweight 20 to perform vertical rectilinear reciprocating motion, also the direction of the double arrow B. A first cam 52 having a cylindrical peripheral face 54 is mounted upon the drive shaft 14. The cylindrical peripheral face 54 of the first cam 52 is arranged eccentrically with respect to the drive shaft axis 16. As is most clearly shown in figure 6, the axial length and D of the first cam 52 corresponds to the thickness D of the counterweight 20. A transverse oval shape to aperture 56 in the counterweight 20 surrounds the first cam 52 in the manner of the yoke. In use, the first cam 52 rotates about the drive shaft axis 16 and this rotational motion is translated into the reciprocating motion of the counterweight 20 in the same way as rotational motion of the pin 40 is translated into the reciprocating motion of the cutting arrangement 22, as described above. The counterweight 20 is provided to counteract the inertial forces created by the reciprocating motion of the cutting arrangement 22.

The pin 40 is arranged on the crank plate 38 such that its eccentricity, with respect to the drive shaft axis 16, is opposed to the eccentricity of the first cam 52, with respect to the drive shaft axis 16. I.e. the centres of the pin 40 and the first cam 52 are offset by 180° about the drive shaft axis 16, so that the centres are located on diametrically opposed sides of the drive shaft axis 16. Accordingly, the reciprocating motion of the counterweight 20 is 180° out of phase with the reciprocating motion of the cutting arrangement 22. The effect of the reciprocating motion of the counterweight 20 counteracting the inertial forces created by the reciprocating motion of the cutting arrangement 22 is thereby achieved.

A second cam 58 is integral with the driven gear 24 and is located between the driven gear 24 and the counterweight 20. The second cam 58 has a cylindrical outer peripheral face 60 which is arranged eccentrically with respect to the drive shaft axis 16. As is most clearly shown by figure 6, the second cam 58 has an axial thickness F.

The timing actuator 18 comprises a sickle shape cam follower 62, a link member 64, a wheel 66, and a wheel support 68. The wheel 66 is rotatably mounted on a lower arm 70 of the wheel support 68.

The cam follower 62 has a finger 72 located at one end. The finger 72 abuts the outer peripheral face 60 of the second cam 58. The cam follower 62 is pivotally mounted on a cam follower axis 44 at an end a remote from the finger 72. In the present embodiment the cam follower axis is also the guide pin 44, although this need not be the case and alternative arrangements are possible. The cam follower axis 44 is fixed in relation to the jigsaw housing 4 and extends substantially in the cutting direction A. Like the second cam 58, the cam follower 62 is located between the driven gear 24 and the counterweight 20. The cam follower 62 has a thickness in the direction of the drive shaft axis 16 which is marginally inferior to thickness F. This allows movement of the cam follower 62 relative to the counterweight 20 and the driven gear 24 without frictional contact therebetween. The cam follower 62 has a foot 76 adjacent the cam follower axis 44.

The link member 64 is guided for reciprocating rectilinear motion and by a bracket (not shown) fixed in relation to the jigsaw housing 4. An end 80 of the link member 64 abuts the foot 76 of the cam follower 62. An opposite end 82 of the link member 64 abuts an upper arm 84 of the wheel support 68. Accordingly, the link member 64 forms a mechanical link between the cam follower 62 and the wheel support 68.

The wheel support 68 is pivotally mounted on a wheel support axis 86 of approximately the midpoint of the wheel support 68. The wheel support axis 86 is fixed with respect to the jigsaw housing 4 and is substantially perpendicular to the cutting direction A. The wheel support 68 is arranged to perform oscillating motion about the wheel support axis 86 in the direction of the curved double arrow C.

The motion of the timing actuator 18 is controlled by the second cam 58 in the following manner. In use, the drive shaft 14 rotates at the second cam 58. The finger 72 follows the path of the outer peripheral face 60 of the second cam 58 causing the cam follower 62 to oscillate about the cam follower axis 44. In turn, the foot 76 acts against the link member 64 such that the oscillating motion of the cam follower 62 is translated into the reciprocating rectilinear motion of the link member 64. Next, the link member 64 acts upon the upper arm 84 of the wheel support 68 such that the rectilinear reciprocating motion of the link member 64 is translated into oscillating motion of the wheel support 68 about the wheel support axis 86 in the direction of the curved double arrow C.

As described above, the cutting arrangement 22 performs a reciprocating motion in the direction of the double arrow B. The saw blade teeth 34 are arranged to cut the workpiece when the cutting arrangement 22 travels in the upward direction. Conversely, the saw blade teeth 34 glide past the workpiece substantially without cutting the workpiece when the cutting arrangement 22 travels in the downward direction. Frictional force between the saw blade 28 and the workpiece is greatest when the saw blade teeth 34 are cutting the workpiece. The cutting frictional force tends to push the saw blade 28 away from the workpiece and in the opposite sense to the cutting direction A. This is undesirable because movement of the saw blade 28 away from the workpiece diminishes the cutting action of the saw blade teeth 34.

The purpose of the timing actuator 18 is to counteract the cutting frictional force so that good cutting action of the saw blade teeth 34 is maintained. The wheel 66 bears against the trailing planar face 36 of the saw blade 28 and rotates as the saw blade 28 follows the reciprocating motion of the cutting arrangement 22. The wheel 66 also oscillates with the wheel support 68 under the control of the second cam 58. The contact between the wheel 66 and the saw blade 28 causes the oscillating motion of the wheel support 68 to be superimposed on the reciprocating motion of the cutting arrangement 22. This occurs in the following manner. In use, the cutting arrangement 22 moves downwardly and the wheel support 68 oscillates counter to the cutting direction A so that the saw blade 28 cam glide past the workpiece. Conversely, as the cutting arrangement 22 moves upwardly the wheel support 68 oscillates with the cutting direction A to counteract the frictional force acting against the saw blade 28 in the opposite sense to the cutting direction A.

## Claims

1. A reciprocating saw comprising:
a cutting arrangement capable of performing reciprocating motion;
a rotatable drive shaft with a drive shaft axis, wherein the drive shaft comprises a first eccentric;
a timing actuator capable of performing reciprocating motion, wherein the timing actuator is associated with the cutting arrangement so that, in use, the reciprocating motion of the timing actuator is transmitted to the cutting arrangement; and
a counterweight capable of performing reciprocating motion, wherein the counterweight is coupled to the first eccentric so that, in use, rotation of the first eccentric drives the reciprocating motion of the counterweight, wherein the reciprocating motion of the counterweight is out of phase with the reciprocating motion of the cutting arrangement, **characterised in that** the drive shaft comprises a second eccentric, wherein the second eccentric is associated with the timing actuator so that, in use, the rotation of the second eccentric controls the reciprocating motion of the timing actuator.

2. A reciprocating saw as claimed in claim 1, wherein the reciprocating motion of the timing actuator is superimposed upon the reciprocating motion of the cutting arrangement.

3. A reciprocating saw as claimed in either one of claims 1 or 2, wherein the first eccentric is a first cam arranged eccentrically with respect to the drive shaft axis, wherein the first cam is yoked by an aperture in the counterweight.

4. A reciprocating saw as claimed in any one of the previous claims, wherein the drive shaft comprises a driven gear and the second eccentric is located between the driven gear and the counterweight.

5. A reciprocating saw as claimed in any one of the previous claims, wherein the second eccentric is a second cam arranged eccentrically with respect to the drive shaft axis.

6. A reciprocating saw as claimed in claim 5, wherein the timing actuator comprises a first part and a second part, wherein the first part engages the second cam so that, in use, the second cam drives the reciprocating motion of the timing actuator, and wherein the second part is associated with the cutting arrangement so that, in use, the reciprocating motion of the timing actuator is transmitted to the cutting arrangement.

7. A reciprocating saw as claimed in claim 6, wherein the first part is coupled to the second part.

8. A reciprocating saw as claimed in claim 6, wherein the first part is coupled to the second part by at least one intermediate part.

9. A reciprocating saw as claimed in any one of claims 6 to 8, wherein the first part is a cam follower contacting the second cam.

10. A reciprocating saw as claimed in claim 9, wherein the cam follower is pivotally mounted on a cam follower axis for oscillating motion.

11. A reciprocating saw as claimed in any one of claims 6 to 10, wherein the second part is a bearing arranged to bear against the cutting arrangement.

12. A reciprocating saw as claimed in claim 11, wherein the bearing is pivotally mounted on a bearing support axis for oscillating motion.

13. A reciprocating saw as claimed in either one of claims 11 or 12, wherein the bearing comprises a wheel rotatably mounted on the bearing.

14. A reciprocating saw as claimed in any one of the previous claims, wherein the cutting arrangement comprises a shaft and a saw blade clamped to the shaft.

15. A reciprocating saw as claimed in any one of the previous claims, wherein the reciprocating motion of the counterweight is 180° out of phase with the reciprocating motion of the cutting arrangement.

16. A reciprocating saw as claimed in any one of the previous claims, wherein the reciprocating saw is a jigsaw supported by a shoe.

17. A reciprocating saw substantially as hereinbefore described with reference to the accompanying drawings, figures 2 to 5.
